(19) Europäisches Patentamt
European Patent Office
Office européen des brevets

(11) **EP 1 693 654 B1**

(12) **EUROPÄISCHE PATENTSCHRIFT**

(45) Veröffentlichungstag und Bekanntmachung des Hinweises auf die Patenterteilung:
**25.01.2012 Patentblatt 2012/04**

(51) Int Cl.:
*G01F 1/84* *(2006.01)*      *G01F 1/74* *(2006.01)*

(21) Anmeldenummer: **05028074.2**

(22) Anmeldetag: **21.12.2005**

(54) **Verfahren zum Betreiben eines Coriolismassendurchflussmessgeräts**

Method for operating a Coriolis mass flow meter

Procédé destiné au fonctionnement d'un débitmètre massique de Coriolis

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **16.02.2005 DE 102005007171**
**06.03.2005 DE 102005012505**

(43) Veröffentlichungstag der Anmeldung:
**23.08.2006 Patentblatt 2006/34**

(73) Patentinhaber: **Krohne AG**
**4019 Basel (CH)**

(72) Erfinder: **Kolahi, Kourosh**
**24118 Kiel (DE)**

(74) Vertreter: **Gesthuysen, von Rohr & Eggert**
**Patentanwälte**
**Huyssenallee 100**
**45128 Essen (DE)**

(56) Entgegenhaltungen:
**EP-A- 1 291 639     WO-A-00/19175**
**US-A- 5 594 180**

**Beschreibung**

Die Erfindung betrifft ein Verfahren zum Betreiben eines Massendurchflußmeßgeräts, das nach dem Coriolis-Prinzip arbeitet, wobei das Massendurchflußmeßgerät ein von einem Medium durchströmtes Meßrohr aufweist, das Meßrohr zu einer vorbestimmten Schwingung angeregt wird und die resultierende Schwingungsantwort des Meßrohrs erfaßt wird.

Coriolis-Massendurchflußmeßgeräte, die nach dem eingangs genannten Verfahren betrieben werden, sind aus dem Stand der Technik gut bekannt, siehe z. B. die DE 100 02 635 A1 WO 00/19175 und US 5594180. Dabei werden herkömmliche Coriolis-Massendurchflußmeßgeräte häufig nach dem Eigenresonanzverfahren betrieben, d. h. in einer Eigenfrequenz des Meßrohrs, im folgenden auch als Resonanzfrequenz bezeichnet, mit einer vorbestimmten Amplitude angeregt.

Herkömmliche Coriolis-Massendurchflußmeßgeräte weisen im einphasigen Strömungsbetrieb sehr hohe Genauigkeiten auf und sind sehr zuverlässig. Treten jedoch Mehrphasenströmungen des durch das Meßrohr strömenden Mediums auf, so können Genauigkeit und Zuverlässigkeit des Coriolis-Massendurchflußmeßgeräts stark fallen. Dabei ist eine Mehrphasenströmung im allgemeinen Fall eine derartige Strömung, die sich aus wenigstens zwei Phasen mit unterschiedlichen physikalischen Eigenschaften zusammensetzt. Die Phasen können dabei entweder aus den gleichen oder aus unterschiedlichen Medien bestehen. Als Phasen werden homogene und räumlich begrenzte Bereiche der Strömung bezeichnet. Beispiele für Mehrphasensträmungen sind Flüssigkeit-Feststoff-Strömungen, Gas-Flüssigkeit-Strömungen, Gas-Feststoff-Strömungen, Wasser-Dampf-Strömungen und Wasser-Luft-Strömungen.

Wie oben schon angedeutet, können bei Mehrphasenströmungen erhebliche Meßfehler auftreten. Die wesentliche Ursache hierfür ist das Auftreten von Sekundärströmungen im Meßrohr, die im wesentlichen durch die voneinander verschiedenen Dichten der unterschiedlichen Phasen der Mehrphasenströmung verursacht werden.

Damit ist es die Aufgabe der Erfindung, ein derartiges Verfahren zum Betreiben eines Massendurchflußmeßgeräts anzugeben, bei dem das Vorliegen einer Mehrphasenströmung erfaßt und vorzugsweise umfänglich kompensiert werden kann.

Ein Verfahren zum Betreiben eines Massendurchflußmeßgeräts ist in WO 00/19175, US 5594180 und im Oberbegriff des Anspruchs 1 so beschrieben, daß die für die Anregung der vorbestimmten Schwingung des Meßrohrs erforderliche Antriebsleistung erfaßt wird und mittels der erfaßten Antriebsleistung das Vorliegen einer Mehrphasenströmung des durch das Meßrohr strömenden Mediums detektiert wird.

Somit ist vorgesehen, die für die Anregung der vorbestimmten Schwingung des Meßrohrs erforderliche Antriebsleistung zu verwenden, um festzustellen, ob eine Mehrphasenströmung des durch das Meßrohr strömenden Mediums vorliegt, so daß insbesondere über Änderungen der erforderlichen Antriebsleistung auf die Art der Strömung rückgeschlossen werden kann. Wird dabei das Vorliegen einer Mehrphasenströmung erfaßt, so wird die entsprechende Information vorzugsweise durch Ausgabe eines binären Signals zur Verfügung gestellt.

Dabei ist erfindungsgemäß vorgesehen, daß die Viskosität des durch das Meßrohr strömenden Mediums bestimmt wird, aus der Viskosität die durch die Viskosität bedingte Verlustleistung bestimmt wird und zur Ermittlung der durch das Vorliegen einer Mehrphasenströmung bedingten Verlustleistung die durch die Viskosität bedingte Verlustleistung und die bei Anregung der vorbestimmten Schwingung des Meßrohrs vorliegenden elektrischen, elektromechanischen und mechanischen Verlustleistungen von der Antriebsleistung subtrahiert werden. Die elektrischen, elektromechanischen und mechanischen Verlustleistungen ergeben sich durch diejenige Antriebsleistung, die erforderlich ist, bei undurchströmtem Meßrohr die vorbestimmte Schwingung aufrechtzuerhalten. Entsprechendes kann z. B. im Rahmen einer Kalibrierung des Coriolis-Durchflußmeßgeräts vorab, also vor der eigentlichen Messung, bestimmt werden. Über die bekannte Viskosität des durch das Meßrohr strömenden Mediums kann ferner die Verlustleistung bestimmt werden, die auf die innere Reibung des durch das Meßrohr strömenden Mediums zurückgeht. Durch Subtraktion dieser Verlustleistungen von der für die Anregung des Meßrohrs erforderlichen Antriebsleistung kann dann die Verlustleistung ermittelt werden, die von dem Vorliegen der Mehrphasenströmung herrührt, also dadurch bedingt ist, daß eine oben schon angesprochene Sekundärströmung in radialer Richtung vorliegt.

Grundsätzlich kann die Viskosität des durch das Meßrohr strömenden Mediums über alle bekannten Verfahren ermittelt werden. Gemäß einer bevorzugten Weiterbildung der Erfindung ist jedoch vorgesehen, daß die Viskosität des durch das Meßrohr strömenden Mediums über den Druckabfall längs des Meßrohrs ermittelt wird. Dabei ist gemäß einer bevorzugten Weiterbildung der Erfindung ferner vorgesehen, daß der Druckabfall längs des Meßrohrs ermittelt wird, indem die Schwingungsantwort des Meßrohrs auf der Grundlage eines physikalisch-mathematischen Modells ausgewertet wird. Insbesondere ist dabei gemäß einer weiteren bevorzugten Weiterbildung der Erfindung vorgesehen, daß das physikalisch-mathematische Modell zur Beschreibung der Schwingung des Massendurchflußmeßgeräts bei Anregung des Meßrohrs in wenigstens zwei voneinander verschiedenen Eigenformen geeignet ist. Dar über hinaus ist vorzugsweise vorgesehen, daß das physikalisch-mathematische Modell auch die Kopplung zwischen den beiden Eigenformen berücksichtigt.

Gemäß einer bevorzugten Weiterbildung der Erfindung ist ferner vorgesehen, daß mittels der durch das Vorliegen einer Mehrphasenströmung bedingten Verlustleistung ein Wert für die in radialer Richtung vorliegende Sekundärströmung ermittelt wird. Dieser Wert kann den Volumenstrom oder/und den Massenstrom angeben und wird vorzugsweise zur Weiterverarbeitung zur Verfügung gestellt und ausgegeben.

Gemäß einer bevorzugten Weiterbildung der Erfindung ist dabei vorgesehen, daß auch die Dichte des durch das Meßrohr strömenden Mediums, vorzugsweise ebenfalls über ein physikalisch-mathematisches Modell für die Schwingung des Massendurchflußmeßgeräts, bestimmt wird.

Schließlich ist gemäß einer bevorzugten Weiterbildung der Erfindung vorgesehen, daß bei Vorliegen einer Zweiphasenströmung das Frequenzspektrum des ermittelten Signals für die Sekundärströmung als Information über die Verteilung einer Strömungsphase oder/und als Maß für den Anteil einer Strömungsphase verwendet wird. Entsprechendes kommt insbesondere bei großem Dichteunterschied, z. B. bei Gas-Flüssigkeit-Strömungen, in Betracht, wobei z. B. die Art und Größe der Gasblasen ermittelt werden kann.

Im einzelnen gibt es nun eine Vielzahl von Möglichkeiten, das erfindungsgemäße Verfahren auszugestalten und weiterzubilden. Dazu wird auf die dem Patentanspruch 1 nachgeordneten Patentansprüche sowie auf die nachfolgende detaillierte Beschreibung eines bevorzugten Ausführungsbeispiels der Erfindung verwiesen. In der Zeichnung zeigt

Fig. 1    den mechanischen Aufbau des Coriolis-Massendurchflußmeßgeräts zur Verwendung mit dem bevorzugten Ausführungsbeispiel der Erfindung,

Fig. 2    einen für das physikalisch-mathematische Modell verwendeten Modellansatz mit konzentrierten Ersatzelementen,

Fig. 3    eine schematische Darstellung des Verhaltens einer Luftblase in einem wassergefüllten Meßrohr eines Coriolis-Massendurchflußmeßgeräts,

Fig. 4    schematisch die Reibung einander benachbarter Strömungsflächen des durch ein Meßrohr eines Coriolis-Massendurchflußmeßgeräts strömenden Mediums,

Fig. 5    schematisch das Strömungsprofil bei einer laminaren Strömung bzw. bei einer turbulenten Strömung,

Fig. 6    den Reibungskoeffizienten als Funktion der Reynolds-Zahl für laminare Strömungen bzw. für turbulente Strömungen und

Fig. 7    ein Strukturbild in einem physikalisch-mathematischen Modell zur Beschreibung der Dynamik eines Coriolis-Massendurchflußmeßgeräts.

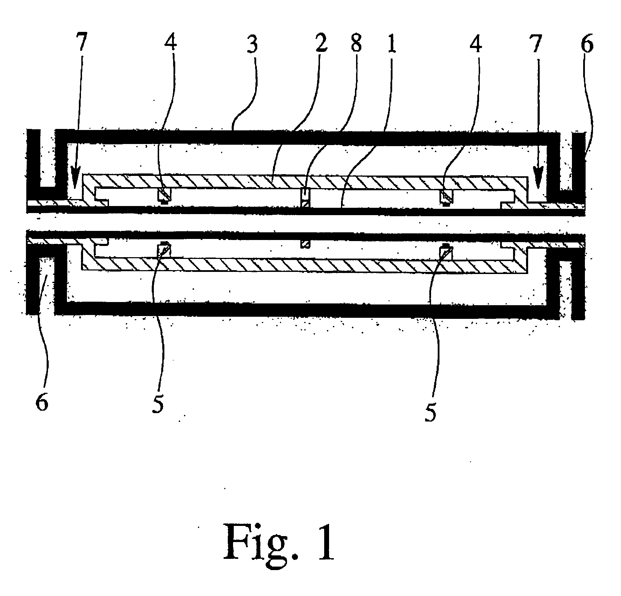

Fig. 1 zeigt im Schnitt ein Coriolis-Massendurchflußmeßgerät zur Verwendung mit den nachfolgend beschriebenen Verfahren gemäß einem bevorzugten Ausführungsbeispiel der Erfindung. Das Conolis-Massendurchflußmeßgerät weist ein Meßrohr 1, ein Tragrohr 2, ein Schutzrohr 3, zwei Schwingungserzeuger 4 und zwei Schwingungssensoren 5 auf. Dabei ist genau ein Meßrohr I mit einer geraden Bauform vorgesehen, das über Flansche 6 in ein bestehendes, nicht weiter dargestelltes Rohrleitungssystem eingebaut werden kann. Die Kopplung zwischen den Flanschen 6 und dem System auf Meßrohr 1 und Tragrohr 2 erfolgt dabei über als Aufhängung 7 bezeichnete Abschnitte. Außerdem ist in der Mitte des Meßrohrs 1 eine das Meßrohr 1 mit dem Tragrohr 2 verbindende Mittenfeder 8 vorgesehen, die dazu dient, die Steifigkeit des Meßrohrs 1 zu erhöhen, wie z. B. in der DE 42 00 060 A1 beschrieben. Dabei sei auch darauf hingewiesen, daß die Erfindung nicht auf die in Fig. 1 gezeigte Bauform beschränkt ist. Vielmehr sind im wesentlichen beliebige Rohrgeometrien, unter anderem auch mit Doppelrohranordnung, möglich.

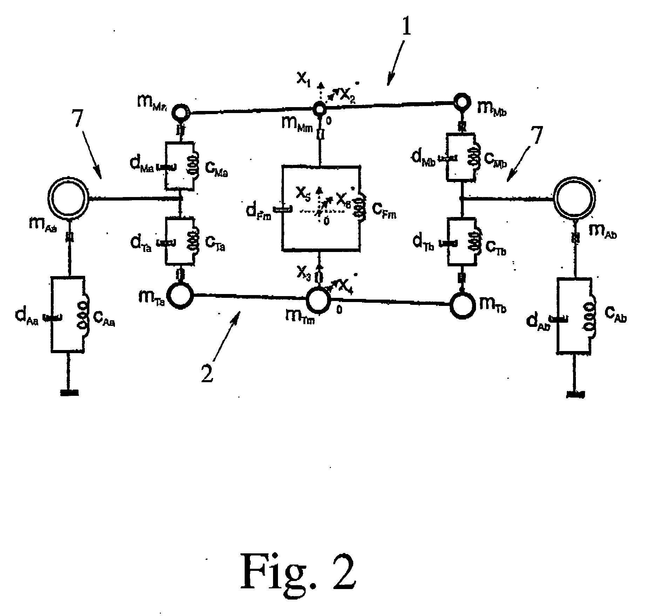

Aus Fig. 2 ist nun ein für das vorliegend verwendete physikalisch-mathematische Modell gültiger Modelleinsatz mit konzentrierten Ersatzelementen des Coriolis-Massendurchflußmeßgeräts ersichtlich. Die wesentlichen mechanischen Bewegungen des Coriolis-Massendurchflußmeßgeräts, wie in Fig. 1 gezeigt, sind die Schwingungen des Meßrohrs 1 und des Tragrohrs 2 in der ersten Eigenform und in der zweiten Eigenform. Sie lassen sich anhand des Schwingverhaltens des aus Fig. 2 ersichtlichen Modells beschreiben. Dabei beschreiben die Ersatzelemente mit Index $M$ die effektiv wirksamen Massen, Federn und Dämpfer des Meßrohrs 1 und die Elemente mit Index T entsprechend die Parameter des Tragrohrs 2. Die mit dem Index $A$ gekennzeichneten Ersatzelemente für Massen, Federn und Dämpfer beschreiben die Ersatzelemente der Aufhängungen 7. Die Indizes $\alpha$ und $b$ stellen jeweils die linke bzw. die rechte Hälfte des Meßrohrs 1, des Tragrohr 2 bzw. der Aufhängungen 7 dar. Die Feder und der Dämpfer mit dem Index $Fm$ tragen der Tatsache Rechnung, daß das Meßrohr 1 in der Mitte geführt ist, nämlich durch die Mittenfeder 8. Ist keine Mittenfeder 8 vorgesehen, so entfallen natürlich die entsprechenden Terme. Die Massen mit dem Index $m$ tragen der Tatsache Rechnung, daß an den Schwingungen in der ersten Eigenform des Meßrohrs bzw. des Tragnohrs eine größere Masse beteiligt ist, als an den Schwingungen in der zweiten. Eigenform.

Einer Schwingung in der ersten Eigenform entspricht in diesem Modell die gleichphasige, translatorische Bewegung der Massen des Meßrohrs 1, des Tragrohrs 2 bzw. der Aufhängungen 7, Eine Rotation der äußeren Massen a und b um die Drehachse $x_2$, $x_4$ bzw. $x_6$ entspricht einer Schwingung in der zweiten Eigenform. Die mathematische Beschreibung des Schwingungsverhaltens dieses Systems kann mit Hilfe der Lagrange-Gleichung 2. Art abgeleitet werden, was im Detail am Ende dieser Beschreibung ausgeführt ist.

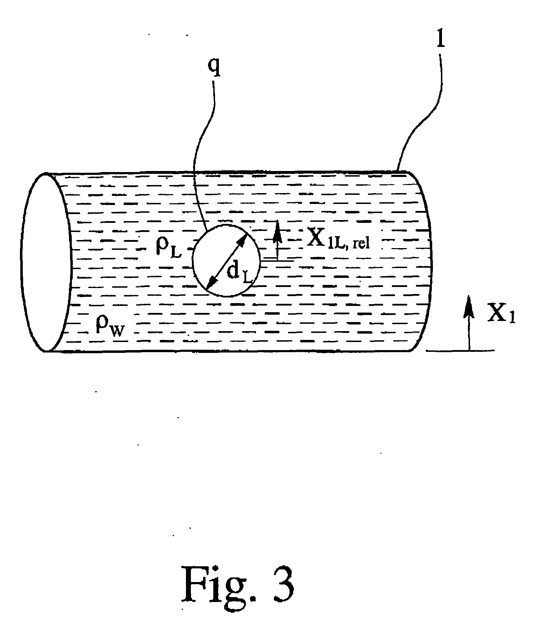

Wie oben schon ausgeführt, können bei Anwendungen mit Mehrphasenströmungen erhebliche Meßfehler auftreten, im wesentlichen bedingt durch Sekundärströmungen im Meßrohr, die durch die unterschiedlichen Dichten der verschiedenen Phasen von mehrphasigen Strömungen verursacht werden. Ein einfaches, in Fig. 3 gezeigtes Beispiel soll dieses Verhalten veranschaulichen. Hierzu sei eine kugelförmige Luftblase q in der Mitte eines wassergefülltes Meßrohrs 1 betrachtet. Das Meßrohr 1 wird zu transversalen Schwingungen in seiner ersten Eigenform beschleunigt. Dabei wirken auf die Luftblase q verschiedene Kräfte ein. Das Kraftgleichgewicht für die Luftblase q lautet:

$$\underbrace{\rho_L V_L \ddot{x}_{1L,rel}}_{[1]} + \underbrace{\frac{1}{2} C_{D\rho W} A_L \dot{x}^2_{1L,rel}}_{[2]} + \underbrace{C_{a\rho W} V_L \ddot{x}_{1L,rel}}_{[3]} = \underbrace{(\rho_\omega - \rho_L) V_L \ddot{x}_1}_{[4]}, \qquad (1)$$

wobei der Einfachheit halber die Schwerkraft und die Kompressibilität der Luftblase q an dieser Stelle außer Achte gelassen worden sind. Dabei bedeuten

$\ddot{x}_1$ := Beschleunigung des Meßrohrs,

$\ddot{x}_{1L,rel}$ := Relativbeschleunigung der Luftblase,

$\ddot{x}_{1L,rel}$ := Relativbeschleunigung der Luftblase.

$\rho_L$, $\rho_W$ = Luftblasendichte, Wasserdichte,

$V_L$ := Luftblasenvolumen,

$d_L$ := Luftblasendurchmesser,

$A_L$ := Luftblasenquerschnittsfläche,

$C_D$ := Widerstandskoeffizient,

$C_a$ := "added mass" Koeffizient,

Ausdruck [1] := Trägheitskraft der Luftblasenmasse,

Ausdruck [2] := Widerstandskraft,

Ausdruck [3] := "added mass" Trägheitskraft, die hinzukommt, da eine Relativbeschleunigung der Luftblase auch eine Beschleunigung eines bestimmten Wasservolumens erfordert,

Ausdruck [4] := der "Auftrieb", d. h. die auf die Luftblase übertragene äußere Kraft.

Die Gleichung 1 beschreibt eine Luftblase in einem konstanten Beschleunigungsfeld. Bei veränderlicher Beschleunigung ist der momentane Widerstand jedoch nicht nur von der momentanen Geschwindigkeit und der momentanen Beschleunigung abhängig, sondern auch vom Strömungszustand, der vorausgegangen ist. Diese "Vorgeschichte" wird im allgemeinen durch den sogenannten "Basset-Term" berücksichügt. Dieser lautet:

$$\frac{3}{2} d_L^2 \sqrt{\pi \rho_W \eta_W} \int_{-\infty}^t \ddot{x}_{1L,rel} \frac{ds}{t-s}, \qquad (2)$$

wobei $\eta_W$ die Wasserviskosität und (t-s) die Zeit seit der letzten Beschleunigung darstellen. Die Formel des Integrals resultiert aus der Wirbelausbildung in Wasser infolge der Blasenbewegvng. Der Basset-Term ist insbesondere für Festkörper von Bedeutung. Durch ihre starre Grenzfläche ist die durch ihre Relativbewegung hervorgerufene Wirbelbildung stark ausgeprägt. Bei Gasblasen mit nachgebender Grenzoberfläche ist die Wirbelbildung wesentlich geringer.

Gleichung 1 zeigt, daß die Luftblase q bezüglich des Wassers eine Relativbewegung ausführt. Dieses Verhalten der Luftblase q läßt sich einfach erklären, wenn man die durch die Anregung des Meßrohrs generierte Beschleunigung ähnlich der Erdbeschleunigung auffaßt. Die Trägheitsbeschleunigung der Luftblase q entspricht in diesem Fall der Erdbeschleunigung, und genauso wie sich die Luftblase im Schwerefeld der Erde entgegen der Schwerkraft nach oben bewegt, wandert die Luftblase q im Falle des beschleunigten Meßrohrs entgegen der Trägheitsbeschleunigung. Grundlegende Ursache für dieses Verhalten ist der Dichteunterschied zwischen der Luftblase q und dem diese umgebenden Wasser.

Da die Luftblase q dem Wasser in der Schwingung vorauseilt, verdrängt sie das vor ihr liegende Wasser, das entgegengesetzte Bewegung mit der Relativgeschwindigkeit $\dot{x}_{1L,rel}$ der Luftblase q zurückströmt. Diese Relativbewegungen führen zu folgenden Effekten:

1. Durch die Relativgeschwindigkeit reduziert sich die vorgesehene, für die Erzeugung der Coriolis-Kraft erforderliche, von außen eingeprägte Schwingungsgeschwindigkeit für die Strömungsphase mit größerer Dichte. Das bedeutet, daß die induzierte Coriolis-Kraft kleiner wird, als die, die ohne Relativgeschwindigkeit vorliegen würde. Anders ausgedrückt führt der Schwerpunkt des sich im Meßrohr 1 befindlichen Mediums eine in der Amplitude kleinere Bewegung aus als sie aufgrund der Anregung erwartet werden könnte. Daraus resultiert, daß ein zu geringer Massestrom gemessen wird.

2. Die für die Relativbewegung erforderliche Leistung wird dem für die Schwingungs anregung verwendeten Schwingungserzeuger entnommen. Diese Leistung kann wesentlich größer sein als die im Meßrohr 1 aufgrund von Dämpfungen dissipierte Leistung.

3. Die Relativbewegungen wirken für die Strömungsphase mit der größeren Dichte wie ein Staukörper, dessen Staufläche mit der doppelten Frequenz der Schwingung — aufgrund der zwei Nulldurchgänge der Beschleunigung innerhalb einer Schwingungsperiode — moduliert ist. Dadurch entsteht ein pulsierender Druckabfall der durch die Dichteunterschiede $\Delta\rho$ in der Zweiphasenströmung bedingt ist:

$$\Delta p_{MP} = f(\Delta\rho). \qquad (3)$$

Dieser Druckabfall überlagert sich dem Druckabfall, der durch die Viskosität $\eta$ der Strömung hervorgerufen und nachfolgend beschrieben wird. Der Druckabfall im Meßrohr 1 läßt sich damit als Summe der beiden Druckabfälle ausdrücken:

$$\Delta p = \Delta p_{\eta}(\eta) + \Delta p_{MP}(\Delta\rho). \qquad (4)$$

Diese drei durch die Mehrphasenströmung bedingten Effekte werden im folgenden zur Detektion von Mehrphasenströmungen, also z. B. von Luftblasen, und/oder zur Bestimmung des volumen- bzw. massenbezogenen Anteils der jeweiligen Strömungsphase sowie zur Verbesserung der Bestimmung des Massestroms, der Dichteunterschiede sowie der Dichte herangezogen.

Bei bekannter Viskosität kann die Antriebsleistung als Indikator einer Zweiphasenströmung verwendet werden. Die Schwingungserzeuger 4 üben eine der vorgegebenen Antriebsleistung $P_a$ entsprechende Anregungskraft $F_a$ auf das Meßrohr 1 aus. Die Antriebsleistung dient zur Kompensation der über elektrische und elektromechanische Verluste sowie mechanische und strömungsmechanische Reibung dem Schwingungssystem entzogenen Verlustleistung. Zur Erzielung einer möglichst hohen, der Mediumsteilchen eingeprägten Geschwindigkeit und damit eines möglichst hohen Wirkungsgrads wird die Antriebsleistung $P_a$ bevorzugt so vorgegeben, daß möglichst keine Blindleistung entsteht, Das heißt, daß zur Erzeugung der Coriolis-Kräfte das Meßrohr 1 bevorzugt in seiner niedrigsten Resonanzfrequenz angetrieben wird.

Zur Anregung des Meßrohrs 1, d. h. zum Einprägen einer Dauerschwingung, bevorzugt in seiner Resonanzfrequenz, wird die Antriebskraft $F_a$ mittels gängiger Verfahren, wie Phasen- und Amplitudenregelung bei autonomen Schwingern, erzeugt Der Aufbau und die Verwendung solcher Phasen- und Amplitudenregelungen zum Betreiben von Meßrohren auf einer ihrer mechanischen Resonanzfrequenzen ist aus dem Stand der Technik gut bekannt. Nach einer bevorzugten Ausgestaltung der Erfindung sind die Amplituden-, Phasen- und Frequenzregelungsalgorithmen mittels eines digitalen Signalprozessors (DSP) oder Microcontrollers ($\mu$C) implementiert. Dabei können natürlich auch andere bekannte Regelungsalgorithmen sowie Realisierungskomponenten verwendet werden.

Die Antriebsleistung in der Resonanzfrequenz dient als ein Maß für die Gesamtheit der geschwindigkeitsproportionalen dissipierten Leistung des Schwingungssystems. Diese dissipierte Leistung läßt sich allgemein in drei Bestandteile zerlegen:

$$P_a = P_{me} + P_{\eta} + P_{MP}, \qquad (5)$$

mit:

$P_a$:= Antriebsleistung,

$P_{me}$:= elektrische, elektromechanische und mechanische Verluste,

$P_n$:= viskositätsbedingte Reibungsverluste,

$P_{MP}$:= durch Relativbewegung der Strömungsphasen bedingte Verluste in radialer Richtung (mehrphasenströmungsbedingte Verluste).

Der Bestandteil $P_{me}$ stellt die Verluste ohne Medium und ohne Strömung dar. Diese auch als Leerleistung bezeichnete Verlustleistung durch elektrische, elektromechanische und mechanische Effekte kann z. B. während einer Kalibrierung des Massendurchflußmeßgeräts vorab ermittelt und in entsprechender Weise während der Messung zur Verfügung gestellt werden. Der Bestandteil $P_\eta$ stellt die viskositätsbedingten Reibungsverluste dar. Diese Verlustleistung ist, wie in der US 4,524,610 oder in der EP 1, 291 639 A1 beschrieben, proportional zur Viskosität:

$$P_\eta \propto \eta. \tag{6}$$

Dabei ist anzumerken, daß bei der EP 1 291 639 A1 die gesamte Verlustleitung, abgesehen von der Leerleistung, auf die Standardabweichung bezogen, der Viskosität zugeschrieben und daraus die Viskosität berechnet wird. Dabei wird der Einfluß der Inhomogenitäten der Strömung auf die Verlustleistung bzw. auf die Bestimmung der Viskosität über die Standardabweichung der Verlustleistung berücksichtigt. Damit wird angenommen, daß die Inhomogenitäten der Stömung keinen Beitrag zum Mittelwert der Verlustleitung liefern. Dies führt auch bei einem kleinen Luftblasenanteil in der Strömung zu hohen Viskositätswerten.

Wird die Viskosität direkt oder indirekt gemessen, und werden bei einem bevorzugten einfachen Modellansatz der Proportionalitätsfaktor und der Nullpunkt z. B. während einer Kalibrierung des Coriolis-Massendurchflußmeßgeräts vorab bei einer einphasigen Strömung, wie einer Wasserströmung, bestimmt, so kann die viskositätsbedingte Verlustleistung berechnet werden: $P_\eta = K_\eta\eta + K_{\eta 0}$. Damit können aus der Gleichung 5 auch die mehrphasenströmungsbedingten Verluste berechnet werden: $P_{MP} = P_a - P_{mc} - P_\eta$. Hieraus läßt sich zunächst auf das Vorhandensein einer Zweiphasenströmung bzw. auf das Vorhandensein von Gasblasen schließen, wozu ein entsprechendes binäres Signal generiert und ausgegeben werden kann.

An dieser Stelle sei ausdrücklich darauf verwiesen, daß zur Realisierung der Erfindung die Bestimmung der Antriebsleistung auf verschiedene, dem Fachmann bekannte Methoden, wie Strom-Spannungsmessungen oder aus dem Sollwert für die Regelkreise erfolgen kann.

Zur Bestimmung der Viskosität können alle gängigen Meßverfahren verwendet werden. Vorzugsweise wird jedoch das nachfolgend beschriebene Verfahren verwendet:

Die Viskosität eines Mediums, auch als Zähigkeit des Mediums bezeichnet, ist die Eigenschaft des Mediums, der Verschiebung zweier, einander benachbarter Schichten des Mediums zueinander einen Widerstand entgegenzusetzen, was auch als innere Reibung bezeichnet wird. Es tritt also ein Fließwiderstand auf, und zwar nicht nur bei Flüssigkeiten, sondern auch bei Gasen und sogar bei Festkörpern. Die dynamische Viskosität $\eta$ ist als Proportionalitätsfaktor zwischen der Schubspannung und der Schergeschwindigkeit beschrieben, also dem Geschwindigkeztsgefälle beim Fließen. Teilt man die dynamische Viskosität durch die Dichte des Mediums, so erhält man die kinematische Viskosität,

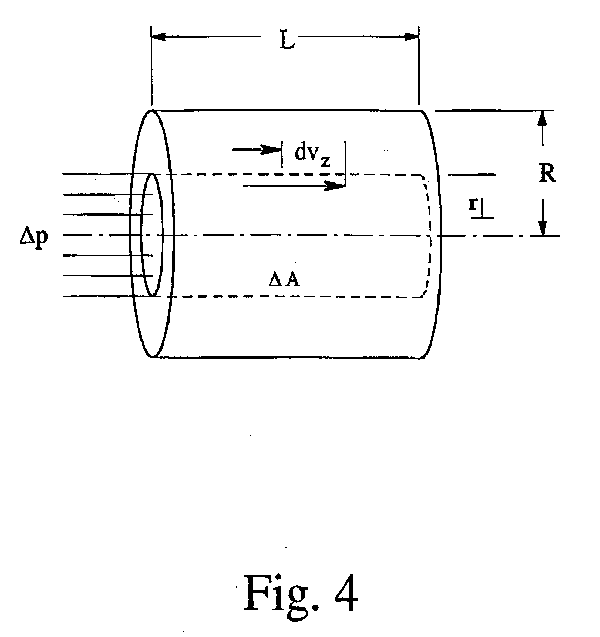

Aus Fig. 4 ist nun schematisch die Reibung zweier, einander benachbarter Strömungsflächen bei einer laminaren Strömung ersichtlich. Bei einer laminaren Strömung besteht in Fließrichtung ein Gleichgewicht zwischen der Reibungskraft $F_W$, die einander benachbarte Strömungsflächen $\Delta A$ mit unterschiedlichen Geschwindigkeiten aufeinander ausüben, und der Druckkraft F, die die Flächen aneinander vorbeitreibt:

$$F_W = \eta \frac{dv_z}{dr_\perp} \cdot \Delta A, \tag{7}$$

wobei $dv_z/dr_\perp$ den Creschwindigkeitsgradienten zwischen den Strömungsflächen beschreibt und für die Druckkraft F gilt;

$$F = \Delta p \cdot \pi r_\perp^2. \tag{8}$$

Daraus ergibt sich eine Differentialgleichung für das Geschwindigkeitsprofil:

$$\frac{dv_z}{dr_\perp} = \frac{r_\perp}{2\eta} \cdot \frac{\Delta p}{L} \qquad (9)$$

mit der Lösung

$$v_z = \frac{1}{4\eta}(R^2 - (r_\perp)^2) \cdot \frac{\Delta p}{L}, \qquad (10)$$

wobei $R$ den Radius des Meßrohrs bezeichnet. Dieses Strömungsprofil ist ein Paraboloid mit den Extremwerten

$$v_z(r_\perp = 0) = \frac{R^2}{4\eta} \cdot \frac{\Delta p}{L} \text{ und } v_z(r_\perp = R) = 0. \qquad (11)$$

Das heißt, daß durch den Druck $p$ auf den inneren Flüssigkeitszylinder dieser mit der Geschwindigkeitsdifferenz $dv_z$ durch den äußeren Zylinder getrieben wird, wobei die Reibungskraft $F_w$ an der Grenzfläche $\Delta A$ entsteht.

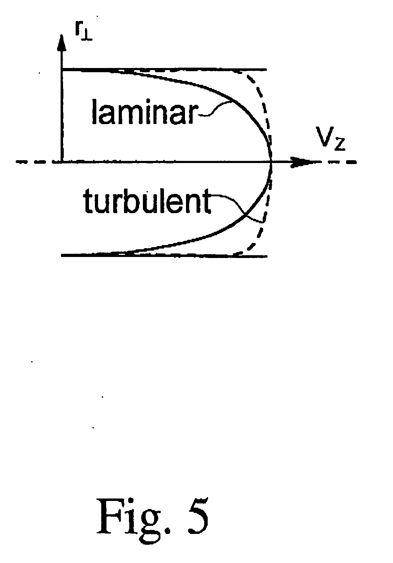

Das resultierende Geschwindigkeitsprofil für eine laminare Strömung ist schematisch aus Fig. 5 ersichtlich. Zum Vergleich ist auch das Strömungsprofil einer turbulenten Strömung wiedergegeben. Dieses zeichnet sich im wesentlichen dadurch aus, daß sich die Strömungsgeschwindigkeit im Inneabereich wenig ändert und erst in der Nähe der Wandung des Meßrohrs stark abnimmt.

Man kann nun die pro Zeiteinheit durch das Meßrohr transportierte Masse bestimmen, und zwar ergibt sich diese zu

$$\dot{m} = \frac{dm}{dt} = 2\pi\rho \int_0^R v_z(r_\perp)r_\perp dr_\perp = \frac{\pi}{8}\frac{\rho}{\eta}R^4\frac{\Delta p}{L}. \qquad (12)$$

Dies ist das bekannte Gesetz von Hagen-Poisseuille, das den Zusammenhang zwischen dem Massendurchfluß, der Fluiddichte und der dynamischen Viskosität bei einer laminaren Strömung beschreibt.

Da in einem Coriolis-Massendurchflußmeßgerät hauptsächlich turbulente Strömung vorliegt, muß der Einfluß der Trägheitskräfte berücksichtigt werden. Wichtig ist dabei, welche Energie $\Delta W$ aufgebracht werden muß, um die Masse $\Delta m$ über die Länge des Meßrohs $L$ zu transportieren. Dieses Verhältnis ergibt sich zu

$$\frac{\Delta W}{\Delta m} = \frac{\Delta p \pi R^2 L}{\rho \pi R^2 L} = \frac{\Delta p}{\rho}, \qquad (13)$$

wobei für eine laminare Strömung gilt

$$\Delta p = \frac{8L\eta\dot{m}}{\pi R^4 \rho}. \qquad (14)$$

Wird in diese Gleichung $\dot{m}$ nach der Beziehung

$$\dot{m} = \pi R^2 \rho \bar{v} \qquad (15)$$

aus der mittleren Strömungsgeschwindigkeit $\bar{v}$ berechnet, so folgt daraus:

$$\Delta p = \frac{8L\eta\bar{v}}{R^2}. \qquad\qquad (16)$$

Setzt man in diese Gleichung das Verhältnis der Reibungskräfte zu den Trägheitskräften, d. h. die Reynolds-Zahl:

$$Re = \frac{2R\bar{v}\rho}{\eta} \qquad\qquad (17)$$

ein, so erhält man

$$\Delta p = \frac{64}{Re} \cdot \frac{\rho\bar{v}^2}{2} \cdot \frac{L}{d}. \qquad\qquad (18)$$

Die Größe

$$P_S = \frac{\rho\bar{v}^2}{2} \qquad\qquad (19)$$

wird allgemein als Staudruck bezeichnet und $64/Re = C_w$ als Reibungskoeffizient der Strömung. Damit erhält man also

$$\frac{\Delta w}{\Delta m} = c_w \frac{P_S L}{\rho d} = \frac{\Delta p}{\rho}. \qquad\qquad (20)$$

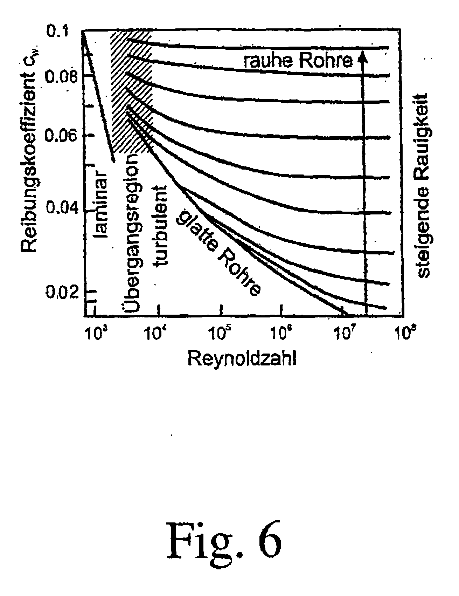

Dieses Gesetz, das zunächst nur für laminare Strömungen hergeleitet worden ist, gilt ganz allgemein, d. h, auch für turbulente Strömungen, wenn der richtige Wert für den Reibungskoeffizienten verwendet wird. Dabei gilt
$C_w = 64/Re$ für laminare Strömungen und
$C_W >> 64/Re$ für turbulente Strömungen.
Die Abhängigkeit des Reibungskoeffizienten von der Reynolds-Zahl ist schematisch aus Fig. 6 ersichtlich, Für sehr große Reynolds-Zahlen wird $C_W$ praktisch konstant, hängt aber von der Oberflächenbeschaffenheit der Rohrwandung des Meßrobrs, also von deren relativer Rauhigkeit, ab. Bei einem Coriolis-Meßgerät mit einem Durchmesser des Meßrohrs von z. B. 10 mm beträgt die Reynolds-Zahl bei typischem Nenndurchfluß etwa $Re = 10^5$, so daß genügend Empfindlichkeit zwischen dem Reibungskoeffizienten $C_w$ und der Reynolds-Zahl vorliegt. Damit können zur Messung der Viskosität zuerst der Reibungskoeffizient $C_W$ und dann die zugehörige Reynolds-Zahl über den abgelegten Zusammenhang mit dem Reibungskoeffizienten bestimmt werden. Anschließend wird die Viskosität über die Gleichung

$$\eta = \frac{2R\bar{v}\rho}{Re} \qquad\qquad (21)$$

ermittelt.
Zur Bestimmung des Zusammenhangs zwischen Reibungskoeffizienten und dazugehörigen Reynolds-Zahlen werden Werte für $C_W$ bei verschiedenen Geschwindigkeiten z. B. für Wasser aufgenommen. Der Zusammenhang läßt sich dann durch eine mathematische Funktion mit wenigen Parametern sehr gut approximieren.
Zur Differenzdruckmessung können alle gängigen Meßprinzipien, wie die Verwendung von Dehnungsmeßstreifen, angewandt werden. Vorzugsweise wird ein derartiges Verfahren eingesetzt, wie im folgenden beschrieben. Bei diesem Verfahren werden zwei physikalisch unterschiedliche Effekte ausgenutzt:

1. Änderung der Federkonstante der beiden Hälften des Meßrohres 1: Beim ersten Effekt wird das Meßrohr 1 als Federelement angesehen, das eingangsseitig und ausgangsseitig jeweils mit unterschiedlichen Drücken beaufschlagt wird. Dadurch weisen die eingangs- bzw. ausgangsseitigen Meßrohrhälften unterschiedliche Federkonstanten auf, wodurch sich im Meßrohr 1 eine Asymmetrie ergibt. Bezogen auf das Modell mit diskreten Ersatzelementen nach Fig. 2 bedeutet dies, daß sich die konzentrierten Ersatzfedersteifigkeiten durch den Differenzdruck ungleich ($C_{Ma} \neq C_{Mb}$) ändern. Ihre Differenz $k_s = C_{Ma} - C_{Mb}$ ist ein Maß für den Differenzdruck im Meßrohr; $k_s = f(\Delta p)$. Diese Asymmetrie in den Federkonstanten führt zu Auslenkungsproportionalen Kopplungen $k_{sij}$ der Eigenformen des Meßrohres 1,

2. Änderungen der Massen der Meßrohrhälften: Beim zweiten Effekt wird durch den Differenzdruck die komprimierbare Phase, falls eine solche vorhanden ist, in der eingangs- und ausgangsseitigen Meßrohrhälfte jeweils unterschiedlich komprimiert. Dadurch weisen die eingangs- bzw. ausgangsseitigen Meßrohrhälften unterschiedliche Massen auf, wodurch eine Asymmetrie im Meßrohr 1 erzeugt wird. Bezogen auf das Modell mit diskreten Ersatzelementen nach Fig. 2 bedeutet dies, daß sich die konzentrierten Ersatzmassen durch den Differenzdruck ungleich ($m_{Ma} \neq m_{Mb}$) ändern. Ihre Differenz $k_a = m_{Ma} - m_{Mb}$ ist ein Maß für den Differenzdruck im Meßrohr, falls eine Strömungsphase kompressibel ist: $k_a = f(\Delta p)$. Diese Asymmetrie in den Massen führt zu beschleunigungsproportionalen Kopplungen $k_{aij}$ der Eigenformen des Meßrohres.

Die auslenkungs- und beschleunigwagsproportionalen Kopplungen sind bei einem monofrequenten Frequenzbetrieb nicht unterscheidbar, denn sie haben im eingeschwungenen Zustand die gleiche Wirkung. Zur Bestimmung ihrer gemeinsamen Wirkung ist nicht die getrennte Bestimmung von $K_{sij}$ und $k_{aij}$ erforderlich, sondern es läßt sich einfach eine ihrer folgenden Kombinationen im eingeschwungenen Zustand bestimmten:

$$k_{saij}(s) = k_{aij}s^2 + k_{sij} \text{ und speziell für } k_{sa12}(s) = k_{a12}s^2 + k_{s12} \qquad (22)$$

$$k_{asij}(s) = k_{aij} + \frac{k_{sij}}{s^2} \text{ und speziell für } k_{as12}(s) = k_{a12} + \frac{k_{s12}}{s^2}, \qquad (23)$$

wobei s der Laplace-Operator ist. Zwischen den äquivalenten Koeffizienten besteht die Beziehung:

$$\frac{k_{as12}(s)}{k_{sa12}(s)} = \frac{1}{s^2}. \qquad (24)$$

Die äquivalenten Koeffizienten lassen sich bei bekannter Frequenz ineinander umrechnen.

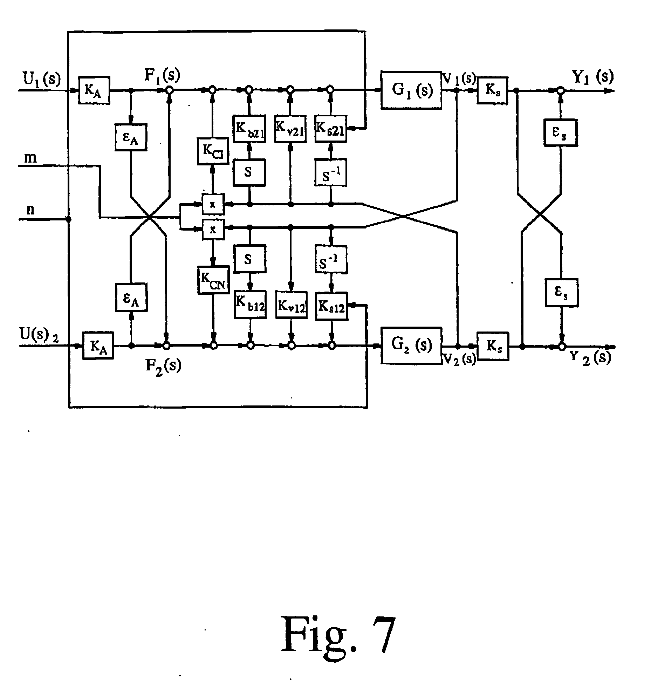

In Fig. 7 sind exemplarisch die Kopplungen der ersten Eigenform mit der zweiten Eigenform bezüglich der Differenz der Federsteifigkeiten und der Massen als reine auslenkungsproportionale Kopplungen $k_{sa12}$ und $k_{sa2l}$ dargestellt.
In diesem Blockschaltbild bedeuten:
$\Delta p:=$ Differenzdruck im Meßrohr,
$\dot{m} :=$ Massendurchfluß,
$F_1(s):=$ Anregungskraft im Bildbereich für die erste Eigenform,
$V_1(s):=$ Geschwindigkeitssignal im Bildbereich für die erste Eigenform,
$G_1(s):=$ Übertragungsfunktion der ersten Eigenform,
$k_{sa12}:=$ auslenkungsproportionale Kopplung von der ersten Eigenform auf die zweite Eigenform,
$F_2(s):=$ Anregungskraft im Bildbereich für die zweite Eigenform,
$V_2(s):=$ Geschwindigkeitssignal im Bildbereich für die zweite Eigenform,
$G_2(s):=$ Übertragungsmnktion der zweiten Eigenform,
$k_{sa2l}:=$ auslenkungsproportionale Kopplung von der zweiten Eigenform auf die erste Eigenform,
$K_{CN}:=$ massenstrombedingte (geschwindigkeitsproportionale) Kopplung von der ersten Eigenform auf die zweite Eigenform,
$K_{cl}:=$ massenstrombedingte (geschwindigkeitsproportionale) Kopplung von der zweiten Eigenform auf die zweite Eigenform,

S:= Laplace-Operator (S$^{-1}$ bedeutet, daß das passierende Signal um -90˚ in den Phasen verschoben wird.)

Die auslenkungsproportionalen Kopplungen über k$_{sa21}$ und $k_{sa12}$ sind orthogonal zur massenstrombedingten (geschwindigkeitsproportionalen) Kopplung der Eigeafoxzxa.en über $K_{CN}$ und $K_{CI}$ Das bedeutet, daß im Prinzip die Separation der masenstrombedingten und differenzdruckbedingten Schwingungen der Eigenformen gegeben ist.

Die Kopplungen $k_{saij}$ können über verschiedene Methoden bestimmt werden. Beispielsweise kann die Kopplung $k_{sal2}$ durch die Beziehung:

$$k_{sa12} = \frac{\omega_{01} Re\{V_2(\omega_{01})\}}{Re\{V_1(\omega_{01})\} Im\{G_2(\omega_{01})\}} \qquad (25)$$

bestimmt werden. In dieser Gleichung sind

$k_{sal2}$:= Differenz der Federsteifigkeiten und der Massen der Meßrohrhälften $C_{Ma}$- $C_{Mb}$,

$\omega_{01}$:= Resonanzftequenz der ersten Eigenform,

$Ref\{V_1 (\omega_{01})\}$:= Realanteil des Geschwindigkeitssignals der ersten Eigenform,

$Re\{V_2(\omega_{01})\}$:= Realanteil des Geschwindigkeitssignals der zweiten Eigenform,

$Im\{G_2 (\omega_{01})\}$ := Imaginäranteil der Übertragungsfunktion der zweiten Eigenform.

Bei der Bestimmungsgleichung (Gleichung 25) wird davon ausgegangen, daß

1. das Meßrohr 1 in der Resonanzfrequenz der ersten Eigenform $\omega_{01}$ schwingt und
2. der Realteil der Übertragungsfunktion des zweiten Modes gleich Null ist ($Re\{G_2 (\omega_{01})\}$ = 0), d. h. daß die zweite Eigenform sich bei dieser Frequenz wie eine Feder verhält, deren Federkonstante bekannt ist.

Die Differenz der Federsteifigkeiten und der Massen $k_{sal2}$ und damit auch der Differenzdruck lassen sich in einem Kompensationsverfahren unabhängig von einem sich eventuell ändernden Imaginärteil der Übertragungsfunktion des zweiten Modes bestimmen. Dazu wird die gemessene Größe $Re\{V_2(\omega_{01})\}$ in einem Regelkreis über die Anregung der zweiten Eigenform mit der Anregungskraft $F_2$ auf Null geregelt. Die Regelung erzwingt also, wie auch aus Fig. 7 erkennbar, daß gilt $F_{2k}$ = -$F_{sl2}$. Damit läßt sich $k_{sal2}$ als Maß für den Differenzdruck über die Bestmunungsgleichung

$$k_{sa12} = -\frac{\omega_{01} F_{2K}(\omega_{01})}{Re\{V_1(\omega_{01})\}} \qquad (26)$$

messen. An dieser Stelle sei ausdrücklich darauf hingewiesen, daß die beiden Effekte, die druckdifferenzbedingten Federsteifigkeitsäudenungen der Meßrohrhälften und die druckdifferenzbedingten Massenänderungen der Meßrohrhälften bei weiteren bevorzugten Realisierungen einzeln, getrennt oder in anderer Kombination zur Differenzdruckmessung verwendet werden können.

Aus den gemessenen Kopplungen $k_{saij}$ läßt sich der Druckabfall im Meßrohr 1 berechnen. Dazu gilt im einfachsten Modellansatz:

$$\Delta p = K_{pij} k_{saij} + K_{pij0}, \text{ und speziell für } k_{sal2} \qquad (27)$$

$$\Delta p = K_{p12} k_{sa12} + K_{p120}. \qquad (28)$$

Die Parameter dieses Modellansatzes oder auch eventuell andere Modellansätze können während einer Kalibrierung des Massendurchflußmeßgeräts vorab ohne weiteres ermittelt und in entsprechender Weise abgespeichert werden. Ihre Bestimmung ist jedoch nicht immer notwendig, da $k_{saij}$ als Maß für $\Delta p$ zuerst in den Gleich- und den Wechselanteil zerlegt wird. Der Gleichanteil wird dann als Maß für die Viskosität und der Wechselanteil als Maß für die Bestimmung der Mehrphasenströmung verwendet.

Der Druckabfall $\Delta p$ läßt sich durch Tief- und Hochpaßfilter in Gleich- und Wechselanteil zerlegen. Hieraus erhält man mit der Gleichung 4 am Ausgang des Tiefpaßfilters:

$$\Delta p^* = f_{TP}(\Delta p) \tag{29}$$

und am Ausgang des Hochpaßfilters:

$$\Delta p_{MP} = f_{HP}(\Delta p), \tag{30}$$

Zur Berechnung des durch die Viskosität bewirkten Druckabfalls ist vom Mittelwert des Druckabfalls $\Delta p^*$ der Mittelwert des durch Relativbewegungen hervorgerufenen Druckabfalls, d. h. der Scheitelwert $\Delta \hat{p}_{MP}$ abzuziehen. Wenn der Scheitelwert $\Delta \hat{p}_{MP}$ aufgrund des überlagerten Rauschens schwer zu ermitteln ist, kann in guter Näherung die geschätzte Varianz von $\Delta p_{MP}$ abzogen werden. Damit ergibt sich für den durch die Viskosität bewirkten Druckabfall:

$$\Delta p_\eta = \Delta p^* - \Delta \hat{p}_{MP} \quad \text{oder} \tag{31}$$

$$\approx \Delta p^* - \hat{\sigma}_{\Delta p_{MP}}, \tag{32}$$

wobei $\hat{\sigma}_{\Delta p_{MP}}$ die geschätzte Varianz ist.

Zur Bestimmung des volumen- oder massenbezogenen Anteils einer Strömungsphase können ebenfalls alle gängigen Meßverfahren verwendet werden. Vorzugsweise wird jedoch das nachfolgend beschriebene Verfahren verwendet:

Bezieht man durch die mehrphasenströmungsbedingte Verlustleistung $p_{MP}$, d. h. die durch die Sekundärströmung in der radialen Richtung bedingte Verlustleistung, auf den durch die Sekundärströmung bedingten Druckabfall:

$$q = \frac{P_{MP}}{\Delta p_{MP}}, \tag{33}$$

so erhält man ein Signal als Maß für die Relativbewegungen der Strömungsphasen bzw. für den Volumenstrom $q_s$ der Sekundärströmung.

Für den Volumenstrom $q_s$ gilt:

$$q_s = f(V_{1,2\ldots}, \Delta \rho_{1,2\ldots}, \ddot{x}_{1,2\ldots} \text{ Verteilung der Strömungsphasen, ...),} \tag{34}$$

wobei $V_{1,2\ldots}$ der Volumenanteil der jeweiligen Strömungsphase, $\Delta \rho_{1,2\ldots}$ der Dichteunterschied zwischen den Strömungsphasen, $\ddot{x}_{1,2\ldots}$ die Beschleunigung der Eigenformen und die Verteilung der jeweiligen Strömungsphasen sind. Unter bestimmten Bedingungen lassen sich die Parameter des Signals $q_s$ dem einen oder dem anderen Parameter der Strömung zuordnen. Diese Zuordnung ist anwendungsspezinsch und wird im folgenden für relevante Spezialfälle erläutert: Sind die Dichteunterschiede der beiden Strömungsphasen groß, wie bei einer Gas-Flüssigkeit-Zweiphasenströmung, so beeinflussen die kleinen Dichteunterschiedsänderungen den Volumenstrom $q_s$ kaum. Der Volumenstrom $q_s$ ist dann empfindlich bezüglich des Volumenanteils der Gasphase und bezüglich der Verteilung der Gasphase. Das Frequenzspektrum des Volumenstroms dient als ein Maß für die Verteilung der Gasphase. Mit Berücksichtigung dieser Verteilung läßt sich über das Signal $q_s$ der Volumenanteil der Gasphase ermitteln.

Zur Bestimmung des Massendurchflusses insgesamt können ebenfalls alle gängigen Meßverfahren verwendet werden, wie in DE 100 02 635 A1 beschrieben.

Zur Bestimmung der Dichte und des Prozeßdrucks können ebenfalls eine Vielzahl von unterschiedlichen, bekannten Verfahren verwendet werden.

Da, wie bereits angedeutet, mittels des beschriebenen Verfahrens neben mediumsintemen Reibungskräften z. B, auch massendurchflußabhängige Coriolis-Kräfte, dichteabhängige Massenträgheitskräfte und druckabhängige Parameteränderungen induziert werden, dient das beschriebene Verfahren nach einer bevorzugten Weiterbildung auch dazu, neben der Detektion einer Zweiphasenströmung auch den Massendurchfluß $\dot{m}$, die Dichte $\rho$, die Viskosität $\eta$ und den Prozeßdruck P simultan zu ermitteln und dem Anwender zur Verfügung zu stellen. Das vorliegend beschriebene Verfahren zum Betrieb eines Massendurchflußmeßgeräts kann in herkömmlichen Coriolis-Massendurchfluß- und Dichtemeßgeräten einfach und kostengünstig implementiert werden,

Abschließend seien noch die Energiebilanz und die Bewegungsgleichungen wiedergegeben, auf die weiter oben Bezug genommen worden ist.

Energiebilanz

Kinetische Energie:

$$E = \frac{1}{2}m_{Ma}(\dot{x}_1 + \dot{x}_2)^2 + \frac{1}{2}m_{Mb}(\dot{x}_1 - \dot{x}_2)^2 + \frac{1}{2}m_{Mm}\dot{x}_1^2 +$$

$$\frac{1}{2}m_{Ta}(\dot{x}_3 + \dot{x}_4)^2 + \frac{1}{2}m_{Tb}(\dot{x}_3 - \dot{x}_4)^2 + \frac{1}{2}m_{Tm}\dot{x}_3^2 + \tag{35}$$

$$\frac{1}{2}m_{Aa}(\dot{x}_5 + \dot{x}_6)^2 + \frac{1}{2}m_{Ab}(\dot{x}_5 - \dot{x}_6)^2$$

Dissipierte Energie pro Zeiteinheit:

$$D = \frac{1}{2}d_{Ma}(\dot{x}_1 + \dot{x}_2 - \dot{x}_5 - \dot{x}_6)^2 + \frac{1}{2}d_{Mb}(\dot{x}_1 - \dot{x}_2 - \dot{x}_5 + \dot{x}_6)^2 +$$

$$\frac{1}{2}d_{Ta}(-\dot{x}_3 - \dot{x}_4 + \dot{x}_5 + \dot{x}_6)^2 + \frac{1}{2}d_{Tb}(-\dot{x}_3 + \dot{x}_4 + \dot{x}_5 - \dot{x}_6)^2 +$$

$$\frac{1}{2}d_{Aa}(\dot{x}_5 + \dot{x}_6)^2 + \frac{1}{2}d_{Ab}(\dot{x}_5 - \dot{x}_6)^2 + \tag{36}$$

$$\frac{1}{2}d_{m}(\dot{x}_1 - \dot{x}_3)^2$$

Potentielle Energie:

$$U = \frac{1}{2}c_{Ma}(x_1 + x_2 - x_5 - x_6)^2 + \frac{1}{2}c_{Mb}(x_1 - x_2 - x_5 + x_6)^2 +$$

$$\frac{1}{2}c_{Ta}(-x_3 - x_4 + x_5 + x_6)^2 + \frac{1}{2}c_{Tb}(-x_3 + x_4 + x_5 - x_6)^2 +$$

$$\frac{1}{2}c_{Aa}(x_5 + x_6)^2 + \frac{1}{2}c_{Ab}(x_5 - x_6)^2 + \tag{37}$$

$$\frac{1}{2}c_{m}(x_1 - x_3)^2$$

Bewegungsgleichungen

$$\frac{d}{dt}(\frac{\partial E}{\partial \dot{q}_n}) - \frac{\partial E}{\partial q_n} + \frac{\partial D}{\partial \dot{q}_n} + \frac{\partial U}{\partial q_n} = F_n \tag{38}$$

Erste-Eigenform-Translation des Meßrohrs entlang der $x_1$-Achse:

$$
\begin{aligned}
(m_{Ma} + m_{Mb} + m_{Mm})\ddot{x}_1 + (d_{Ma} + d_{Mb} + d_m)\dot{x}_1 + (c_{Ma} + c_{Mb} + c_m)x_1 + \\
(m_{Ma} - m_{Mb})\ddot{x}_2 + (d_{Ma} - d_{Mb})\dot{x}_2 + (c_{Ma} - c_{Mb})x_2 + \\
(-d_m)\dot{x}_3 + (-c_m)x_3 + \\
(-d_{Ma} - d_{Mb})\dot{x}_5 + (-c_{Ma} - c_{Mb})x_5 + \\
(-d_{Ma} + d_{Mb})\dot{x}_6 + (-c_{Ma} + c_{Mb})x_6 = F_1
\end{aligned}
\tag{39}
$$

Zweite-Eigenform-Rotation des Meßrohrs um die $x_2$-Achse:

$$
\begin{aligned}
(m_{Ma} + m_{Mb})\ddot{x}_2 + (d_{Ma} + d_{Mb})\dot{x}_2 + (c_{Ma} + c_{Mb})x_2 + \\
(m_{Ma} - m_{Mb})\ddot{x}_1 + (d_{Ma} - d_{Mb})\dot{x}_1 + (c_{Ma} - c_{Mb})x_1 + \\
(-d_{Ma} + d_{Mb})\dot{x}_5 + (-c_{Ma} + c_{Mb})x_5 + \\
(-d_{Ma} - d_{Mb})\dot{x}_6 + (-c_{Ma} - c_{Mb})x_6 = F_2
\end{aligned}
\tag{40}
$$

Translation des Trägerrohrs entlang der $x_3$-Achse:

$$
\begin{aligned}
(m_{Ta} + m_{Tb} + m_{Tm})\ddot{x}_3 + (d_{Ta} + d_{Tb} + d_m)\dot{x}_3 + (c_{Ta} + c_{Tb} + c_m)x_3 + \\
(-d_m)\dot{x}_1 + (-c_m)x_1 + \\
(m_{Ta} - m_{Tb})\ddot{x}_4 + (d_{Ta} - d_{Tb})\dot{x}_4 + (c_{Ta} - c_{Tb})x_4 + \\
(-d_{Ta} - d_{Tb})\dot{x}_5 + (-c_{Ta} - c_{Tb})x_5 + \\
(-d_{Ta} + d_{Tb})\dot{x}_6 + (-c_{Ta} + c_{Tb})x_6 = -F_1
\end{aligned}
\tag{41}
$$

Rotation des Trägerrohrs um die $x_4$-Achse:

$$
\begin{aligned}
(m_{Ta} + m_{Tb})\ddot{x}_4 + (d_{Ta} + d_{Tb})\dot{x}_4 + (c_{Ta} + c_{Tb})x_4 + \\
(m_{Ta} - m_{Tb})\ddot{x}_3 + (d_{Ta} - d_{Tb})\dot{x}_3 + (c_{Ta} - c_{Tb})x_3 + \\
(-d_{Ta} + d_{Tb})\dot{x}_5 + (-c_{Ta} + c_{Tb})x_5 + \\
(-d_{Ta} - d_{Tb})\dot{x}_6 + (-c_{Ta} - c_{Tb})x_6 = -F_2
\end{aligned}
\tag{42}
$$

Translation entlang der $x_5$-Achse:

$$(m_{Aa} + m_{Ab})\ddot{x}_5 + (d_{Ma} + d_{Mb} + d_{Ta} + d_{Tb} + d_{Aa} + d_{Ab})\dot{x}_5 +$$
$$(c_{Ma} + c_{Mb} + c_{Ta} + c_{Tb} + c_{Aa} + c_{Ab})x_5 +$$
$$(-d_{Ma} - d_{Mb})\dot{x}_1 + (-c_{Ma} - c_{Mb})x_1 +$$
$$(-d_{Ma} + d_{Mb})\dot{x}_2 + (-c_{Ma} + c_{Mb})x_2 +$$
$$(-d_{Ta} - d_{Tb})\dot{x}_3 + (-c_{Ta} - c_{Tb})x_3 + \qquad (43)$$
$$(-d_{Ta} + d_{Tb})\dot{x}_4 + (-c_{Ta} + c_{Tb})x_4 +$$
$$(m_{Aa} - m_{Ab})\ddot{x}_6 +$$
$$(d_{Ma} - d_{Mb} + d_{Ta} - d_{Tb} + d_{Aa} - d_{Ab})\dot{x}_6 +$$
$$(c_{Ma} - c_{Mb} + c_{Ta} - c_{Tb} + c_{Aa} - c_{Ab})x_6 = F_5$$

Rotation um die $x_6$-achse:

$$(m_{Aa} + m_{Ab})\ddot{x}_6 + (d_{Ma} + d_{Mb} + d_{Ta} + d_{Tb} + d_{Aa} + d_{Ab})\dot{x}_6 +$$
$$(c_{Ma} + c_{Mb} + c_{Ta} + c_{Tb} + c_{Aa} + c_{Ab})x_6 +$$
$$(-d_{Ma} + d_{Mb})\dot{x}_1 + (-c_{Ma} + c_{Mb})x_1 +$$
$$(-d_{Ma} - d_{Mb})\dot{x}_2 + (-c_{Ma} - c_{Mb})x_2 +$$
$$(-d_{Ta} + d_{Tb})\dot{x}_3 + (-c_{Ta} + c_{Tb})x_3 + \qquad (44)$$
$$(-d_{Ta} - d_{Tb})\dot{x}_4 + (-c_{Ta} - c_{Tb})x_4 +$$
$$(m_{Aa} - m_{Ab})\ddot{x}_5 +$$
$$(d_{Ma} - d_{Mb} + d_{Ta} - d_{Tb} + d_{Aa} - d_{Ab})\dot{x}_5 +$$
$$(c_{Ma} - c_{Mb} + c_{Ta} - c_{Tb} + c_{Aa} - c_{Ab})x_5 = F_6$$

**Patentansprüche**

1.  Verfahren zum Betreiben eines Massendurchflußmeßgeräts, das nach dem Coriolis-Prinzip arbeitet, wobei das Massendurchflußmeßgerät ein von einem Medium durchströmtes Meßrohr (1) aufweist, das Meßrohr (1) zu einer vorbestimmten Schwingung angeregt wird, die resultierende Schwingungsantwort des Meßrohrs (1) erfaßt wird, die für die Anregung der vorbestimmten Schwingung des Meßrohrs (1) erforderliche Antriebsleistung erfaßt wird und mittels der erfaßten Antriebsleistung das Vorliegen einer Mehrphasenströmung des durch das Meßrohr (1) strömenden Mediums detektiert wird, **dadurch gekennzeichnet, daß** die Viskosität des durch das Meßrohr (1) strömenden Mediums bestimmt wird, aus der Viskosität die durch die Viskosität bedingte Verlustleistung bestimmt wird und zur Ermittlung der durch das Vorliegen einer Mehrphasenströmung bedingten Verlustleistung die durch die Viskosität bedingte Verlustleistung und die bei Anregung der vorbestimmten Schwingung des Meßrohrs (1) vorliegenden elektrischen, elektromechanischen und mechanischen Verlustleistungen von der Antriebsleistung subtrahiert werden.

2.  Verfahren nach Anspruch 1, **dadurch gekennzeichnet, daß** die Viskosität des durch das Meßrohr (1) strömenden Mediums über den Druckabfall längs des Meßrohrs (1) ermittelt wird.

3.  Verfahren nach Anspruch 2, **dadurch gekennzeichnet, daß** der Druckabfall längs des Meßrohrs ermittelt wird, indem die Schwingungsantwort des Meßrohrs (1) auf der Grundlage eines physikalisch-mathematischen Modells ausgewertet wird.

4.  Verfahren nach Anspruch 3, **dadurch gekennzeichnet, daß** das physikalischmathematische Modell zur Beschreibung der Schwingung des Massendurchflußmeßgeräts bei Anregung des Meßrohrs (1) in wenigstens zwei voneinander verschiedenen Eigenformen geeignet ist.

5. Verfahren nach Anspruch 4, **dadurch gekennzeichnet, daß** das physikalischmathematische Modell die Kopplung zwischen den beiden Eigenformen berücksichtigt.

6. Verfahren nach einem der Ansprüche 1 bis 5, **dadurch gekennzeichnet, daß** mittels der durch das Vorliegen einer Mehrphasenströmung bedingten Verlustleistung ein Wert für die in radialer Richtung vorliegende Sekundärströmung ermittelt wird.

7. Verfahren nach einem der Ansprüche 1 bis 6, **dadurch gekennzeichnet, daß** die Dichte des durch das Meßrohr (1) strömenden Mediums, vorzugsweise über ein physikalisch-mathematisches Modell für die Schwingung des Massendurchflußmeßgeräts, bestimmt wird.

8. Verfahren nach einem der Ansprüche 1 bis 7, **dadurch gekennzeichnet, daß** bei Vorliegen einer Zweiphasenströmung das Frequenzspektrum des ermittelten Signals für die Sekundärströmung als Information über die Verteilung einer Strömungsphase oder/und als Maß für den Anteil einer Strömungsphase verwendet wird.

9. Verfahren nach einem der Ansprüche 1 bis 8, **dadurch gekennzeichnet, daß** mittels wenigstens eines im Massendurchflußmeßgerät vorgesehenen Temperatursensors eine Temperaturmessung erfolgt und die dabei ermittelte Temperatur für die Korrektur von Temperatureinflüssen verwendet wird.

**Claims**

1. A method for operating a mass flowmeter that employs the Coriolis principle, wherein the mass flowmeter incorporates a measuring tube (1) through which flows a medium, the measuring tube (1) is excited to oscillate in a predefined pattern, the resulting oscillatory response of the measuring tube (1) is measured, the drive power level required for exciting the measuring tube into the predefined oscillation is quantified and the presence of a multiphase flow of the medium traveling through the measuring tube is detected by means of the quantified drive power, **characterized in that** the viscosity of the medium flowing through the measuring tube (1) is determined, the viscosity-induced power dissipation is determined based on the viscosity and the viscosity-induced power dissipation and the present electric, electromechanical and mechanical power losses caused in the excitation of the predefined oscillation of the measuring tube (1) are subtracted from the drive power level.

2. The method according to claim 1, **characterized in that** the viscosity of the medium flowing through the measuring tube (1) is determined by way of the pressure drop over the length of the measuring tube (1).

3. The method according to claim 2, **characterized in that** the pressure drop along the measuring tube (1) is determined through an evaluation of the oscillary response of the measuring tube (1) on the basis of a physical-mathematical model.

4. The method according to claim 3, **characterized in that** the physical-mathematical model is capable of describing the oscillation of the mass flowmeter upon excitation of the measuring tube (1) in at least two mutually different self-resonant modes.

5. The method according to claim 4, **characterized in that** the physical-mathematical model takes into account the coupling between the two self-resonant modes.

6. The method according to any one of claims 1 to 5, **characterized in that** a value for the radially existing secondary flow is determined on the basis of the power dissipation occasioned by the presence of a multiphase flow,

7. The method according to any one of claims 1 to 6, **characterized in that** the density of the medium flowing through the measuring tube (1) is determined with the aid of a physical mathematical model for the oscillation of the mass flowmeter.

8. The method according to any one of claims 1 to 7, **characterized in that** in the presence of a dual phase flow, the frequency spectrum of the signal detected for the secondary flow is used for providing information on the distribution of a flow phase and/or as a measure of the proportion of a flow phase.

**9.** The method according to any one of claims 1 to 8, **characterized in that** a temperature measurement is taken by means of at least one temperature sensor provided in the mass flowmeter, and the temperature value thus measured is used for correcting the effects of thermal factors.

## Revendications

**1.** Procédé d'utilisation d'un débitmètre massique, lequel fonctionne selon le principe de Coriolis, le débitmètre massique présentant un tube de mesure (1) traversé par un courant de fluide, le tube de mesure (1) étant amené par excitation à une oscillation prédéfinie, la réponse d'oscillation résultante du tube de mesure (1) étant détectée, la puissance d'entraînement nécessaire pour amener le tube de mesure (1) par excitation à l'oscillation prédéfinie étant détectée et la présence d'un écoulement multiphasé du fluide qui s'écoule à travers le tube de mesure (1) étant détectée au moyen de la puissance d'entraînement détectée, **caractérisé en ce que** la viscosité du fluide qui s'écoule à travers le tube de mesure (1) est déterminée, les pertes de puissance liées à la viscosité sont déterminées à partir de la viscosité et les pertes de puissance résultant de la présence d'un écoulement multiphasé sont déterminées en soustrayant de la puissance d'entraînement les pertes de puissance liées à la viscosité ainsi que les pertes de puissance électriques, électromécaniques et mécaniques produites en amenant le tube de mesure (1) par excitation à l'oscillation prédéfinie.

**2.** Procédé selon la revendication 1, **caractérisé en ce que** la viscosité du fluide qui s'écoule à travers le tube de mesure (1) est déterminée par le biais de la chute de pression le long du tube de mesure (1).

**3.** Procédé selon la revendication 2, **caractérisé en ce que** la chute de pression le long du tube de mesure est déterminée en interprétant la réponse d'oscillation du tube de mesure (1) sur la base d'un modèle physico-mathématique.

**4.** Procédé selon la revendication 3, **caractérisé en ce que** le modèle physico-mathématique convient pour décrire l'oscillation du débitmètre massique lors de l'excitation du tube de mesure (1) en au moins deux formes propres différentes l'une de l'autre.

**5.** Procédé selon la revendication 4, **caractérisé en ce que** le modèle physico-mathématique tient compte du couplage entre les deux formes propres.

**6.** Procédé selon l'une des revendications 1 à 5, **caractérisé en ce qu'**une valeur pour l'écoulement secondaire qui est présent dans le sens radial est déterminée au moyen des pertes de puissance résultant de la présence d'un écoulement multiphasé.

**7.** Procédé selon l'une des revendications 1 à 6, **caractérisé en ce que** la densité du fluide qui s'écoule à travers le tube de mesure (1) est déterminée de préférence par le biais d'un modèle physico-mathématique pour l'oscillation du débitmètre massique.

**8.** Procédé selon l'une des revendications 1 à 7, **caractérisé en ce qu'**en présence d'un écoulement biphasé, le spectre de fréquences du signal déterminé pour l'écoulement secondaire est utilisé comme information sur la distribution d'une phase e d'écoulement et/ou comme mesure de la proportion d'une phase d'écoulement.

**9.** Procédé selon l'une des revendications 1 à 8, **caractérisé en ce qu'**une mesure de température est réalisée au moyen d'au moins une sonde de température prévue dans le débitmètre massique et la température ainsi déterminée est utilisée pour la correction des influences de la température.

Fig. 1

Fig. 2

Fig. 3

# Fig. 4

Fig. 5

Fig. 6

Fig. 7

**EP 1 693 654 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10002635 A1
- WO 0019175 A
- US 5594180 A
- DE 4200060 A1
- US 4524610 A
- EP 1291639 A1